# EUROPÄISCHE PATENTSCHRIFT

(11) **EP 2 232 089 B1**
(45) Veröffentlichungstag und Bekanntmachung des Hinweises auf die Patenterteilung: **27.11.2013**
(21) Anmeldenummer: 09704925.8
(22) Anmeldetag: 20.01.2009
(51) Int. Cl.: F16B 37/12, F16B 39/282

(54) **GEWINDEEINSATZ UND FAHRZEUGTEIL**
THREADED INSERT AND VEHICLE COMPONENT
INSERT FILETÉ ET PIÈCE DE VÉHICULE

(30) Priorität: 24.01.2008 DE 202008000982 U
(43) Veröffentlichungstag der Anmeldung: 29.09.2010
(73) Patentinhaber: Ruia Global Fasteners AG, 41462 Neuss (DE)
(72) Erfinder: SCHRAER, Thorsten, 85305 Jetzendorf (DE)
(74) Vertreter: Beck, Alexander
(86) Internationale Anmeldenummer: PCT/DE2009/000058
(87) Internationale Veröffentlichungsnummer: WO 2009/092355

(56) Entgegenhaltungen:
- DE-A1-102004 050 625
- GB-A- 2 002 866
- GB-A- 2 237 615
- US-A- 3 370 631
- US-A- 4 820 235

## Beschreibung

Die vorliegende Erfindung betrifft einen Gewindeeinsatz sowie ein Fahrzeugteil aus Leichtmetall mit einem solchen Gewindeeinsatz.

Kraftfahrzeuge werden zur Gewichtseinsparung zunehmend aus Leichtmetall gebaut. In solchen Leichtmetall-Karosseriestrukturen müssen dann aber auch Schrauben aus Stahl eingeschraubt werden. Aufgrund der geringeren Widerstandsfähigkeit von Leichtmetall führt dies dazu, dass entsprechende Schrauben leicht ausreißen, wenn sie lediglich in Gewinde gesetzt werden, die in das Leichtmetall geschnitten worden sind.

Zur Lösung dieses Problems hat man bisher Gewindeeinsätze ("Flanschmuttern") aus Stahl benutzt, die einen rotationssymmetrischen Körper mit einer zentralen koaxialen Bohrung mit einem Innengewinde und einem Flansch aufgewiesen haben. Diese Gewindeeinsätze wurden sodann anstelle eingeschnittener Gewinde in entsprechende Bohrungen in die Leichtmetallteile eingesetzt. Dies war jedoch nur in solchen Anwendungsfällen möglich, in denen man beim Einschrauben der entsprechenden Schrauben auch Zugang zu der Rückseite des Leichtmetallteils hatte, um den Gewindeeinsatz dort festzuhalten, während die Schraube eingedreht wird.

Wenn die entsprechende Rückseite zum Zeitpunkt des Einschraubens der Schrauben nicht zugänglich war, war es gemäß dem Stand der Technik ausschließlich möglich, entsprechende Muttern mit Metallklipsen, beispielsweise nach Art einer Käfigmutter an den Bohrungen zu befestigen. Dies führte jedoch zu weiteren Problemen. Zum einen gibt der entsprechende Klipp nach, wenn die Schraube zu stark gegen die Mutter gedrückt wird. Die Mutter weicht dann aus und die Schraube wird nicht senkrecht sondern schief in das Gewinde eingeschraubt. Manchmal wird der Klipp auch falsch angebracht und die Schraube kann die Innengewindebohrung der Mutter nicht finden. Des Weiteren muss der Klipp vor der Montage des entsprechenden Teils an der Bohrung angebracht werden. Zwischenzeitlich kann der Klipp durch andere Arbeitsvorgänge abgestreift werden. Des Weiteren ist es häufig erforderlich, auf beiden Seiten des Fahrzeuges unterschiedlich gestaltete Klipps zu verwenden. Dadurch besteht die Gefahr, dass linke und rechte Teile vertauscht werden und außerdem ist es erforderlich eine größere Anzahl von Teilen vorzuhalten. Schließlich ist die Herstellung eines passenden Klipps und dessen Einsetzen in eine entsprechende Bohrung sehr aufwendig. Letztlich führt die entsprechende Kombination aus Mutter und Klipp in vielen Fällen auch dazu, dass eine zu hohe punktuelle Kraft an einer Stelle auf das Leichtmetallteil aufgebracht wird. Unter diesen Umständen neigt das Leichtmetall zum "Kriechen", so dass sich die Verbindung mit der Zeit lösen kann. Dieses letztere Problem tritt übrigens auch auf, wenn ein Gewindeeinsatz nach dem Stand der Technik verwendet wird, und der Flansch nicht ausreichend groß gewählt wird oder werden kann.

Der hierzu nächstgelegene Stand der Technik ergibt sich aus der DE 10 2004 050 625 A1. Dort ist bereits ein Gewindeeinsatz mit einer zentralen koaxialen Bohrung mit einem Innengewinde in einem rotationssymmetrischen Körper, dessen eines Ende mit einem Kraftangriff versehen ist und einem nach außen überstehenden Flansch aufweist, beschrieben, wobei das dem Kraftangriff gegenüberliegende Ende des rotationssymmetrischen Körpers jenseits des Flansches mit einem Außengewinde versehen ist, welches eine dem Innengewinde entgegengesetzte Gewindesteigung aufweist.

Der in diesem Stand der Technik beschriebene Gewindeeinsatz eignet sich nur zur Verwendung in Kunststoffteilen, da dort das als selbstschneidendes Gewinde ausgebildete Außengewinde ein wesentlich höheres zum Drehen des Schraubelementes erforderliches Drehmoment aufweist, als das für die Bewegung der Halteschraube erforderliche Drehmoment.

Aufgabe der vorliegenden Erfindung ist es daher, einen solchen Gewindeeinsatz dergestalt weiterzubilden, dass er auch in Leichtmetallteilen eingesetzt werden kann.

Erfindungsgemäß wird diese Aufgabe durch einen Gewindeeinsatz gelöst, der einen mittig angeordneten Flansch aufweist, der auf seiner dem Außengewinde zugewandten Seite mit radial verlaufenden Rippen versehen ist und bei dem als Kraftangriff ein Außenkraftangriff dient, sowie durch ein Fahrzeugteil aus Leichtmetall mit einem Gewindeeinsatz aus Stahl, bei dem der Gewindeeinsatz an einem Ende jenseits des Flansches mit einem Außengewinde versehen ist, welches eine dem Innengewinde entgegengesetzte Gewindesteigung aufweist, und der Gewindeeinsatz mit diesem Außengewinde in ein entsprechendes Innengewinde in dem Fahrzeugteil eingeschraubt ist.

Durch die gegeneinander laufenden Gewinde wird vorteilhafterweise erreicht, dass sich der Gewindeeinsatz noch fester in das Fahrzeugteil einschraubt, wenn die entsprechende Schraube angezogen wird. Außerdem wird nicht mehr die gesamte Verschraubungskraft über den Flansch auf das Leichtmetallteil übertragen, sondern ein nicht unerheblicher Teil dieser Verschraubungskraft wird über das Außengewinde in das Leichtmetallteil übertragen. Auf diese Weise werden Lastspitzen in der Auflagefläche des Flansches auf dem Leichtmetallteil vermieden, durch die es sonst zu einem Kriechen des Leichtmetalls kommen könnte. Gemäß der vorliegenden Erfindung können also beispielsweise größere Kräfte übertragen werden oder der entsprechende Flansch kann kleiner gewählt werden als bei den Gewindeeinsätzen gemäß dem Stand der Technik.

Besonders bevorzugt ist es dabei, dass das Innengewinde als Rechtsgewinde und das Außengewinde als Linksgewinde ausgeführt ist. Auf diese Weise können normale Schrauben mit Rechtsgewinde wie üblich eingeschraubt werden.

Der Gewindeeinsatz besteht vorzugsweise aus Stahl, da auf diese Weise die optimale Materialpassung zu den entsprechenden Schrauben hergestellt ist.

Besonders bevorzugt ist es, den Flansch auf seiner dem Außengewinde zugewandten Seiten mit radial verlaufenden Rippen zu versehen. Auf diese Weise wird eine zusätzliche Losdrehsicherung zwischen Gewindeeinsatz und Leichtmetallteil erzielt.

Weiter ist es bevorzugt, zwischen dem Flansch und dem Außengewinde eine ringförmig umlaufende Nut anzuordnen. Auf diese Weise wird sichergestellt, dass die dem Außengewinde zugewandte Seite des Flansches auf ihrer vollen Fläche trägt und der Gewindeeinsatz nicht nur in einem kleinen Bereich im Übergang zwischen Außengewinde und Flansch aufliegt und nur dort Kraft überträgt. Ohne diese umlaufende Nut müsste die Bohrung, in die der Gewindeeinsatz eingeschraubt wird, mit einer entsprechenden Senkung versehen werden, was wiederum zusätzlichen Arbeitsaufwand bedeuten würde.

Besonders bevorzugt ist es dabei, wenn sich die Nut nach Art eines Hinterschnittes auch in axialer Richtung in den Flansch hinein erstreckt.

Vorzugsweise findet als Kraftangriff ein Außensechskant Verwendung.

Besonders bevorzugt ist es, den Flansch auf seiner dem Außengewinde zugewandten Oberfläche am äußeren Rand mit einer in Axialrichtung vorspringenden, ringförmig umlaufenden Erhebung zu versehen, um auf diese Weise eine Abdichtung des Außengewindes gegen korrosive Einflüsse zu erreichen.

Ebenso ist es bevorzugt, den Flansch auf seiner dem Außengewinde zugewandten Oberfläche innen um das Außengewinde herum mit einer in Axialrichtung vorspringenden, ringförmig umlaufenden Erhebung zu versehen. Auch dies dient der weiteren Abdichtung des Außengewindes gegen Feuchtigkeit und Salz von außen, um so eventuelle elektrochemische Korrosion zwischen dem Außengewinde und dem Leichtmetallmaterial des Fahrzeugteils zu verhindern.

Eine Ausführungsform der vorliegenden Erfindung wird im Folgenden anhand der beigefügten Zeichnungen näher erläutert. Es zeigt:
Fig. 1 eine dreidimensionale Darstellung eines erfindungsgemäßen Gewindeeinsatzes;
Fig. 2 eine teilweise geschnittene Darstellung des Gewindeeinsatzes der Figur 1 von der Seite in einer Ebene, die durch die Rotationsachse des Gewindeeinsatzes läuft;

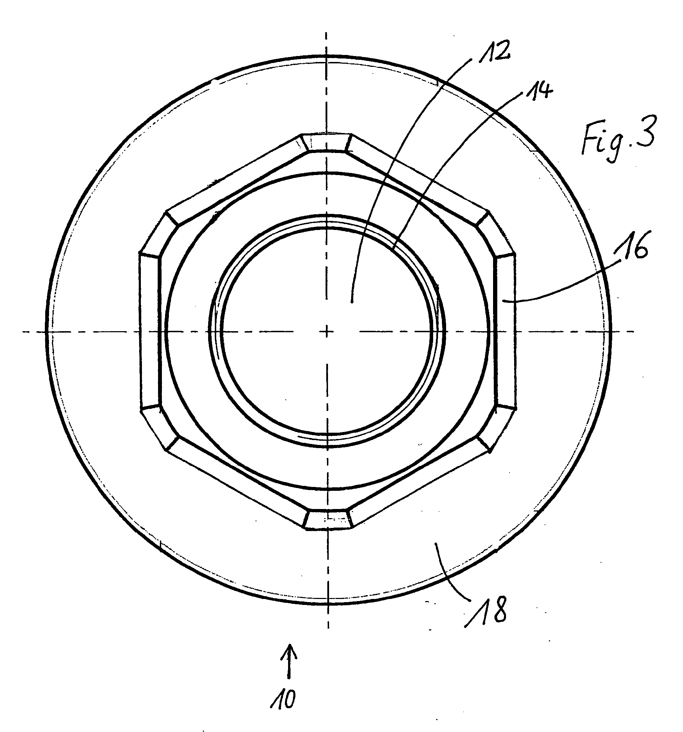

Fig. 3 eine Ansicht des Gewindeeinsatzes der Figur 1 vom Kraftangriff aus gesehen; und

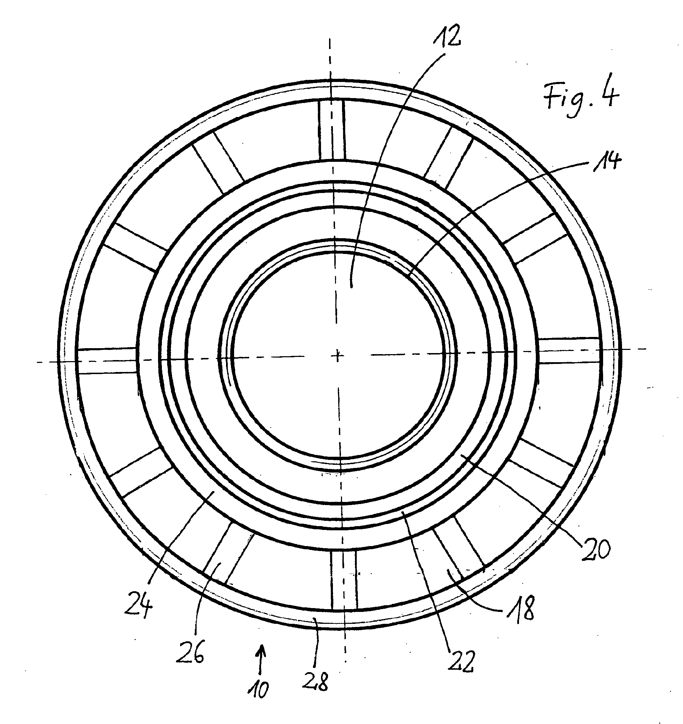

Fig. 4 eine Ansicht des Gewindeeinsatzes der Figur 1 vom Fahrzeugteil aus gesehen.

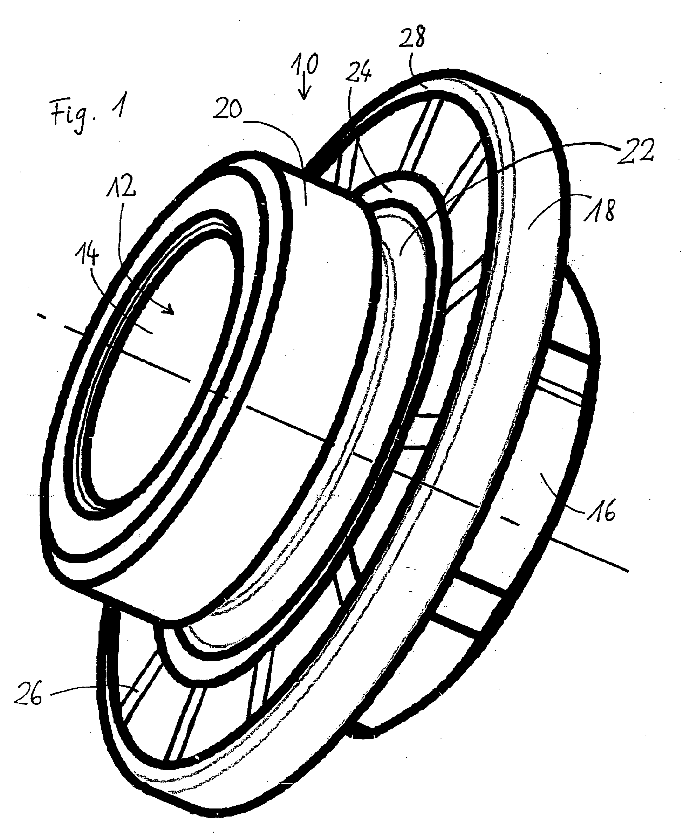

Figur 1 zeigt einen erfindungsgemäßen Gewindeeinsatz 10 mit einem rotationssymmetrischen Körper dreidimensional schräg von der Seite dargestellt. Vorzugsweise besteht dieser Gewindeeinsatz aus Stahl. Er weist eine zentrale koaxiale Bohrung mit einem Innengewinde 14 auf. Das Innengewinde 14 ist dabei als normales rechtsläufiges Gewinde ausgeführt. Auf seiner äußeren Mantelfläche weist der Gewindeeinsatz 10 an einem Ende einen Außenkraftangriff 16 auf. Dieser ist vorzugsweise als Außensechskant gestaltet. In der Mitte des Gewindeeinsatzes 10 schließt sich an dem Kraftangriff 16 ein weit nach außen vorspringender, ebenfalls ringförmiger Flansch 18 an. Jenseits dieses Flansches 18 befindet sich am anderen Ende des Gewindeeinsatzes 10 ein Außengewinde 20, welches hier als Linksgewinde ausgeführt ist. Vorteilhaft ist dabei, dass die Gewindesteigungen von Innengewinde 14 und Außengewinde 20 gegeneinander gerichtet sind. Selbstverständlich kann auch das Innengewinde 14 ein Linksgewinde und das Außengewinde 20 ein Rechtsgewinde sein.

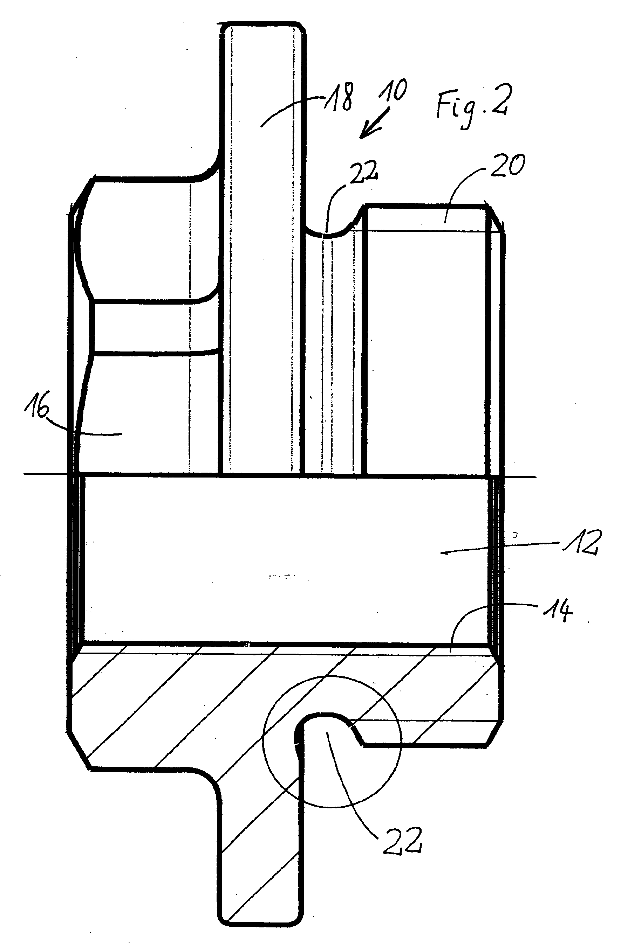

Zwischen dem Außengewinde 20 und dem Flansch 18 ist eine ringförmig umlaufende Nut 22 angeordnet. Wie man am Besten in der Schnittdarstellung der Figur 2 erkennt, erstreckt sich diese ringförmig umlaufende Nut 22 dabei auch noch etwas in Axialrichtung in den Flansch 18 hinein.

Auf der dem Außengewinde 20 und damit später der Oberfläche des Fahrzeugteils zugewandten Oberfläche des Flansches 18 schließt sich an die Nut 22 ein umlaufender, aus der Oberfläche des Flansches 18 hervorstehender Ring 24 an. Dieser soll beim Anziehen des Gewindes 20 in einem Fahrzeugteil gegen die Oberfläche des Fahrzeugteils gedrückt werden, und so eine Abdichtung des Gewindes 20 bewirken. Außerhalb dieser ringförmigen Erhebung 24 befinden sich dann auf der fahrzeugteilseitigen Oberfläche des Flansches 18 radial verlaufende, rippenartige Erhebungen 26, die ebenfalls auf die Oberfläche des Fahrzeugteils hin vorspringen und in ihrem tangentialen Querschnitt flach gewölbt ausgebildet sind. Diese rippenartigen Erhebungen 26 dienen als Losdrehsicherung, um zu vermeiden, dass sich im Betrieb das Außengewinde 20 gegenüber dem Fahrzeugteil, in dem es verschraubt ist, lockert. Die Wirkung dieser Stege 26 entspricht den Rippen bei der im Stand der Technik bekannten Rippscheibe (siehe EP 426 895 B1).

Bei der vorliegenden Ausführungsform sind zwölf solche Stege 26 vorgesehen. Selbstverständlich kann die Zahl dieser Stege abhängig von der Größe des Gewindeeinsatzes 10 und abhängig von der Materialpaarung auch anders gewählt werden. Vorzugsweise sind die Rippen 26 über den Umfang gleichmäßig verteilt.

Außerhalb des Bereiches mit den Rippen 26 befindet sich auf der dem Fahrzeugteil zugewandten Oberfläche des Flansches 18 noch ein weiterer ringförmig umlaufender Vorsprung 28, der in eingebautem Zustand des Gewindeeinsatzes 10 als eine weitere Abdichtung für das Gewinde 20 und die rippenartigen Erhebungen 26 gegen kapillar eindringende Flüssigkeiten dient.

Diese erfindungsgemäße Ausführungsform hat folgende Vorteile:

Die Gegenläufigkeit der Gewinde 14 und 20 stellt sicher, dass beim Einschrauben einer Schraube in das Innengewinde 14 der Gewindeeinsatz noch fester in das Fahrzeugteil eingeschraubt wird. Auf diese Weise verteilt sich vorteilhafterweise die Zugkraft, die über das Innengewinde 14 übertragen wird auf die dem Außengewinde zugewandte Oberfläche des Flansches 18 und auf das Außengewinde 20. Somit wird die Flächenpressung vermindert und es kann entweder ein kleinerer Durchmesser für den Flansch 18 oder ein höheres Anzugsdrehmoment für die Schraube gewählt werden.

Die umlaufende Ringnut 22 erspart es, das in dem Fahrzeugteil vorzusehende Gegengewinde gegen das Außengewinde 20 am Rand zu senken. Trotzdem ist sichergestellt, dass der Flansch 18 vollflächig aufliegt, und nicht, wie dies ohne Senkung des Gewindes im Fahrzeugteil und ohne die Nut 22 denkbar wäre, lediglich in einem schmalen ringförmigen Bereich um das Außengewinde 20 herum aufliegt.

Die vorliegende Erfindung ist zwar für die Materialpaarung Fahrzeugteil aus Leichtmetall (beispielsweise Aluminium oder Aluminiumlegierungen) und Gewindeeinsatz aus Stahl entwickelt worden. Solche Gewindeeinsätze lassen sich jedoch auch in anderen Bauteilen aus weichen Materialien, beispielsweise aus Kunststoff oder GFK vorteilhaft verwenden. Dann kann der Gewindeeinsatz 10 auch aus einem anderen Material, beispielsweise einem entsprechend härterem Kunststoff oder einem weicheren Metall hergestellt sein.

## Patentansprüche

1. Gewindeeinsatz (10) mit einer zentralen koaxialen Bohrung (12) mit einem Innengewinde (14) in einem rotationssymmetrischen Körper, dessen eines Ende mit einem Kraftangriff (16) versehen ist, und der mit einem nach außen überstehenden Flansch (18) versehen ist, wobei das dem Kraftangriff (16) gegenüberliegende Ende des rotationssymmetrischen Körpers jenseits des Flansches (18) mit einem Außengewinde (20) versehen ist, welches eine dem Innengewinde (14) entgegen gesetzte Gewindesteigung aufweist, **dadurch gekennzeichnet, dass** der Flansch (18) auf seiner dem Außengewinde (20) zugewandten Seite mit radial verlaufenden Rippen (26) versehen ist, der Flansch (18) mittig angeordnet ist und der Kraftangriff (16) als Außenkraftangriff ausgebildet ist.

2. Gewindeeinsatz (10) nach Anspruch 1, **dadurch gekennzeichnet, dass** das Innengewinde (14) als Rechtsgewinde und das Außengewinde (20) als Linksgewinde ausgeführt ist.

3. Gewindeeinsatz (10) nach Anspruch 1 oder 2, **dadurch gekennzeichnet, dass** der Gewindeeinsatz (10) aus Stahl ausgebildet ist.

4. Gewindeeinsatz (10) nach Anspruch 1, 2 oder 3, **dadurch gekennzeichnet, dass** zwischen dem Flansch (18) und dem Außengewinde eine ringförmig umlaufende Nut (22) angeordnet ist.

5. Gewindeeinsatz (10) nach Anspruch 4, **dadurch gekennzeichnet, dass** sich die Nut (22) nach Art eines Hinterschnitts auch in axialer Richtung in den Flansch (18) hinein erstreckt.

6. Gewindeeinsatz (10) nach einem der Ansprüche 1 bis 5, **dadurch gekennzeichnet, dass** als Kraftangriff (16) ein Außensechskant vorgesehen ist.

7. Gewindeeinsatz (10) nach einem der Ansprüche 1 bis 6, **dadurch gekennzeichnet, dass** der Flansch (18) auf seiner dem Außengewinde (20) zugewandten Oberfläche am äußeren Rand mit einer in Axialrichtung vorspringenden, ringförmig umlaufenden Erhebung (28) versehen ist.

8. Gewindeeinsatz (10) nach einem der Ansprüche 1 bis 7, **dadurch gekennzeichnet, dass** der Flansch (18) auf seiner dem Außengewinde (20) zugewandten Oberfläche innen um das Außengewinde (20) herum mit einer in Axialrichtung vorspringenden, ringförmig umlaufenden Erhebung (24) versehen ist.

9. Fahrzeugteil aus Leichtmetall mit einem Gewindeeinsatz (10) mit einem rotationssymmetrischen Körper aus Stahl mit einer zentralen, koaxialen Bohrung (12) mit einem Innengewinde (14), der mittels eines Flansches (18) auf einer Oberfläche des Fahrzeugteils aufliegt, **dadurch gekennzeichnet, dass** der Gewindeeinsatz (10) an einem Ende jenseits des Flansches (18) mit einem Außengewinde (20) versehen ist, welches eine dem Innengewinde (14) entgegen gesetzte Gewindesteigung aufweist und mit dem der Gewindeeinsatz (10) in ein entsprechendes Innengewinde in dem Fahrzeugteil eingeschraubt ist, und der Flansch (18) des Gewindeeinsatzes (10) auf seiner dem Fahrzeugteil zugewandten Oberfläche mit radial verlaufenden Rippen (26) versehen ist.

10. Fahrzeugteil nach Anspruch 9, **dadurch gekennzeichnet, dass** das Innengewinde (14) des Gewindeeinsatzes (10) als Rechtsgewinde und das Außengewinde (20) als Linksgewinde ausgeführt ist.

11. Fahrzeugteil nach Anspruch 9 oder 10, **dadurch gekennzeichnet, dass** an dem Gewindeeinsatz (10) zwischen dem Flansch (18) und dem Außengewinde (20) eine ringförmig umlaufende Nut (22) angeordnet ist.

12. Fahrzeugteil nach Anspruch 11, **dadurch gekennzeichnet, dass** sich die Nut (22) nach Art eines Hinterschnitts auch in axialer Richtung in den Flansch (18) hinein erstreckt.

13. Fahrzeugteil nach einem der Ansprüche 9 bis 12, **dadurch gekennzeichnet, dass** der Gewindeeinsatz (10) mit einem Außenkraftangriff (16) versehen ist, der vorzugsweise als Außensechskant ausgebildet ist.

14. Fahrzeugteil nach einem der Ansprüche 9 bis 13, **dadurch gekennzeichnet, dass** der Flansch (18) des Gewindeeinsatzes (10) auf seiner dem Außengewinde (20) zugewandten Seite am Außenrand mit einer in Axialrichtung vorspringenden, ringförmig umlaufenden Erhebung (28) versehen ist.

15. Fahrzeugteil nach einem der Ansprüche 9 bis 14, **dadurch gekennzeichnet, dass** der Flansch (18) des Gewindeeinsatzes (10) auf seiner dem Außengewinde (20) zugewandten Seite innen, um das Außengewinde (20) herum mit einer in Axialrichtung vorspringenden, ringförmig umlaufenden Erhebung (24) versehen ist.

## Claims

1. Threaded insert (10) having a central coaxial bore (12) having an Internal thread (14) in a rotationally symmetrical body, one end thereof having a force engagement (16) and having an externally protruding flange (18), wherein the end of the rotationally symmetrical body opposite the force engagement (16) on the other side of the flange (18) is provided with an external thread (20) which is having a thread pitch opposite that of the internal thread (14), **characterized in that** the flange (18) has radially extending ribs (26) on the side thereof facing the external thread (20), the flange (18) Is positioned centrally, and the force engagement (16) is formed as an external force engagement.

2. Threaded insert (10) according to claim 1, **characterized in that** the internal thread (14) is performed as a right-hand thread and the external thread (20) is performed as a left-hand thread.

3. Threaded insert (10) according to claim 1 or 2, **characterized in that** the threaded insert (10) is consisting of steel.

4. Threaded insert (10) according to claim 1, 2 or 3, **characterized in that** between the flange (18) and the external thread there is positioned an annularly circulating groove (22).

5. Threaded insert (10) according to claim 4, **characterized in that** the groove (22) is according to the kind of an undercut extending, too, in an axial direction into the flange (18).

6. Threaded insert (10) according to one of the claims 1 to 5, **characterized in that** as a force engagement (16) an external hexagon is provided.

7. Threaded insert (10) according to one of the claims 1 to 6, **characterized in that** the flange (18) on the surface facing the external thread (20) at the outer edge thereof is provided with a projection (28) projecting In the axial direction and being annularly circulating.

8. Threaded Insert (10) according to one of the claims 1 to 7, **characterized In that** the flange (18) on its surface facing the external thread (20) on the inner side around the external thread (20) is provided with a projection (24) being annularly circulating and projecting in the axial direction.

9. Vehicle component of light metal with a threaded insert (10) having a rotatlonally symmetrical body provided with a central coaxial bore (12) having an internal thread (14) which by means of a flange (18) is contacting the surface of a vehicle component, **characterized in that** the threaded insert (10) at one end beyond the flange (18) is provided with an external thread (20) which is having a thread pitch opposite to that of the internal thread (14) and by the means of which the threaded Insert (10) Is screwed Into a corresponding internal thread in the vehicle component and, that the flange (18) of the threaded Insert (10) has radially extending ribs (26) on Its surface facing the vehicle component.

10. Vehicle component according to claim 9, **characterized in that** the internal thread (14) of the threaded Insert (10) Is performed as a right-hand thread and that the external thread (20) is performed as a left-hand thread.

11. Vehicle component according to claim 9 or 10, **characterized in that** at the threaded insert (10) between the flange (18) and the external thread (20) a circulating annular groove (22) is provided.

12. Vehicle component according to claim 11, **characterized In that** the groove (22) in the way of an undercut is extending, too, in an axial direction into the flange (18).

13. Vehicle component according to any of the claims 9 to 12, **characterized In that** the threaded Insert (10) is provided with an external force engagement (16), which preferably is formed as an external hexagon.

14. Vehicle component according to any of the claims 9 to 13, **characterized in that** the flange (18) of the threaded insert (10) on its side facing the external thread (20) at the exterior edge is provided with a circulating annular projection (28) projecting in the axial direction.

15. Vehicle component according to any of the claims 9 to 14, **characterized in that** the flange (18) of the threaded insert (10) on its side facing the external thread (20) is provided with an annularly circulating projection (24) projecting in the axial direction and surrounding the external thread (20).

## Revendications

1. Pièce rapportée filetée (10) présentant un alésage coaxial central (12) avec un filet interne (14) dans un corps à symétrie de révolution, dont une extrémité est pourvue d'une prise de force (16) et qui est dotée d'une bride (18) dépassant vers l'extérieur, dans laquelle l'extrémité du corps à symétrie de révolution opposée à la prise de force (16) de l'autre côté de la bride (18) est pourvue d'un filet externe (20), qui présente un pas de vis réglé à l'inverse du filet interne (14), **caractérisée en ce que** la bride (18) est pourvue, sur son côté tourné vers le filet externe (20), de nervures (26) s'étendant radialement, la bride (18) est aménagée en position centrale et la prise de force (16) se présente sous la forme d'une prise de force externe.

2. Pièce rapportée filetée (10) selon la revendication 1, **caractérisée en ce que** le filet interne (14) se présente sous la forme d'un filet à droite et le filet externe (20) sous la forme d'un filet à gauche.

3. Pièce rapportée filetée (10) selon la revendication 1 ou la revendication 2, **caractérisée en ce que** la pièce rapportée filetée (10) est formée d'acier.

4. Pièce rapportée filetée (10) selon la revendication 1, 2 ou 3, **caractérisée en ce qu'**une rainure périphérique annulaire (22) est ménagée entre la bride (18) et le filet externe.

5. Pièce rapportée filetée (10) selon la revendication 4, **caractérisée en ce que** la rainure (22) s'étend également dans la direction axiale dans la bride (18) à la manière d'une contre-dépouille.

6. Pièce rapportée filetée (10) selon l'une quelconque des revendications 1 à 5, **caractérisée en ce qu'**il est prévu comme prise de force (16) un hexagone mâle.

7. Pièce rapportée filetée (10) selon l'une quelconque des revendications 1 à 6, **caractérisée en ce que** la bride (18) est pourvue, sur sa surface tournée vers le filet externe (20), sur son bord externe, d'une élévation périphérique annulaire (28) saillant dans la direction axiale.

8. Pièce rapportée filetée (10) selon l'une quelconque des revendications 1 à 7, **caractérisée en ce que** la bride (18) est pourvue, sur sa surface tournée vers le filet externe (20), à l'intérieur, autour du filet externe (20), d'une élévation périphérique annulaire (24) saillant dans la direction axiale.

9. Pièce de véhicule automobile en métal léger avec une pièce rapportée filetée (10) comportant un corps à symétrie de révolution en acier présentant un alésage coaxial central (12) avec un filet interne (14), qui s'applique au moyen d'une bride (18) sur une surface de la pièce de véhicule automobile, **caractérisée en ce que** la pièce rapportée filetée (10) est pourvue, à une extrémité de l'autre côté de la bride (18), d'un filet externe (20), qui présente un pas de vis réglé à l'inverse du filet interne (14) et avec lequel la pièce rapportée filetée (10) est vissée dans un filet interne correspondant de la pièce de véhicule automobile, et la bride (18) de la pièce rapportée filetée (10) est pourvue, sur sa surface tournée vers la pièce de véhicule automobile, de nervures (26) s'étendant radialement.

10. Pièce de véhicule automobile selon la revendication 9, **caractérisée en ce que** le filet interne (14) de la pièce rapportée filetée (10) se présente sous la forme d'un filet à droite et le filet externe (20) sous la forme d'un filet à gauche.

11. Pièce de véhicule automobile selon la revendication 9 ou la revendication 10, **caractérisée en ce qu'**une rainure périphérique annulaire (22) est ménagée sur la pièce rapportée filetée (10) entre la bride (18) et le filet externe (20).

12. Pièce de véhicule automobile selon la revendication 11, **caractérisée en ce que** la rainure (22) s'étend également dans la direction axiale dans la bride (18) à la manière d'une contre-dépouille.

13. Pièce de véhicule automobile selon l'une quelconque des revendications 9 à 12, **caractérisée en ce que** la pièce rapportée filetée (10) est pourvue d'une prise de force externe (16) qui se présente de préférence sous la forme d'un hexagone mâle.

14. Pièce de véhicule automobile selon l'une quelconque des revendications 9 à 13, **caractérisée en ce que** la bride (18) de la pièce rapportée filetée (10) est pourvue, sur son côté tourné vers le filet externe (20), sur son bord externe, d'une élévation périphérique annulaire (28) saillant dans la direction axiale.

15. Pièce de véhicule automobile selon l'une quelconque des revendications 9 à 14, **caractérisée en ce que** la bride (18) de la pièce rapportée filetée (10) est pourvue, sur son côté tourné vers le filet externe (20), à l'intérieur, autour du filet externe (20), d'une élévation périphérique annulaire (24) saillant dans la direction axiale.
